# EUROPEAN PATENT SPECIFICATION

(11) **EP 3 912 873 B1**
(45) Date of publication and mention of the grant of the patent: **05.07.2023**
(21) Application number: 21172994.2
(22) Date of filing: 10.05.2021
(51) Int. Cl.: B60T 10/04, B60T 10/00

(54) **LIFT TRUCK**
GABELSTAPLER
CHARIOT ÉLÉVATEUR

(30) Priority: 18.05.2020 IT 202000011428
(43) Date of publication of application: 24.11.2021
(73) Proprietor: TOYOTA MATERIAL HANDLING MANUFACTURING ITALY S.p.A, 40132 Bologna (IT)
(72) Inventor: DALL'OLIO, Aldo, 40057 GRANAROLO DELL'EMILIA (BOLOGNA) (IT); COLTURATO, Carlo, 44121 FERRARA (IT)
(74) Representative: Casadei, Barbara

(56) References cited:
- US-A- 4 364 230
- US-A1- 2007 272 457
- US-A1- 2014 023 523
- US-A1- 2018 231 122
- US-A1- 2019 136 877
- US-B1- 6 202 783

## Description

This invention relates to a lift truck which comprises transmission means of the hydrostatic type for coupling an internal combustion engine unit to a pair of drive wheels. One example belonging to the state of the art is disclosed in document US 2014/023523 A1.

The hydrostatic transmission makes it possible to continuously vary the transmission ratio, reversing the direction of rotation of the drive wheels (therefore, the direction of travel) and disconnecting the internal combustion engine from the drive wheels.

The hydrostatic transmission comprises an hydraulic pump with variable cylinder displacement and one/or more hydraulic motors with a fixed or variable displacement.

The adjustment of the displacement of the pump and, if necessary, of the one/more engines allows the transmission ratio between the engine unit and the drive wheels to be varied in the acceleration condition, that is to say, transmitting power from the engine unit to the wheels, or in the decelerating condition, that is, absorbing the kinetic energy of the vehicle and transferring it to the internal combustion engine unit which, driven by the transmission, dissipates it.

The deceleration condition is limited by the capacity to dissipate the kinetic energy basically on the thermal engine, through friction, pumping losses, etc., in proportion to the speed of the engine.

There is a limitation to the kinetic energy which can be dissipated during braking due to characteristics of the engine unit, considering the maximum speed of the engine unit when it is driven, to prevent damage to the engine unit if it exceeds predetermined speed limits.

Moreover, the limitation in the kinetic energy which can be dissipated by the engine unit translates into a limitation of the maximum deceleration which can be obtained, that is to say, of the braking, and therefore also of the stopping distances of the vehicle.

Since the energy which can be dissipated is also proportional to the speed of the engine unit driven, the noise generated by the engine at high speed constitutes a negative element of the transmission during the deceleration conditions.

In this context, the need has been felt of providing a lift truck which comprises an internal combustion engine unit, at least one pair of drive wheels and means for hydrostatic transmission of the internal combustion engine to the drive wheels. The technical problem is solved by means of a lift truck according to claim 1.

The lift truck comprises a hydraulic system for actuating at least one actuator unit comprising at least one main circuit for distributing a hydraulic fluid and at least one auxiliary circuit for actuating the actuator unit.

The auxiliary circuit comprises at least a first branch for delivery of the hydraulic fluid to the actuator unit and at least a second branch for return from the actuator unit.

The auxiliary circuit comprises at least a third branch in communication along which is positioned at least one unit for dissipating the hydraulic fluid.

The auxiliary circuit comprises a selective distribution unit configured to pass at least between a first operating position, at which it is in communication with the third branch, and a second operating position, at which it is in communication with the actuator unit.

A control and control unit is configured to process at least one deceleration signal and to receive at least one reference value of the engine unit.

In the condition of deceleration of the lift truck, the command and control unit is configured for comparing the reference value of the engine unit with a threshold value and, if the reference value exceeds the threshold value, for controlling at least the activation of the dissipating unit.

Advantageously, the dissipation unit makes it possible to increase the dissipation capacity of the kinetic energy of the vehicle being braked, reducing the over-speed of the engine unit, consequently reducing stresses and noise, and increasing the deceleration value, in other words reducing the stopping distance of the vehicle.

Advantageously, the dissipation unit has been inserted as an additional unit in a branch of the auxiliary circuit, thereby avoiding structural modifications or variations of the main circuit for distributing the hydraulic fluid, which keeps its structure unchanged, thus resulting in less structural complexity of the hydraulic system, resulting in cost savings.

Advantageously, the dissipation unit is located in a branch of the auxiliary circuit of the hydraulic system for driving an actuator unit, thus preventing the production of a circuit dedicated to the dissipation unit.

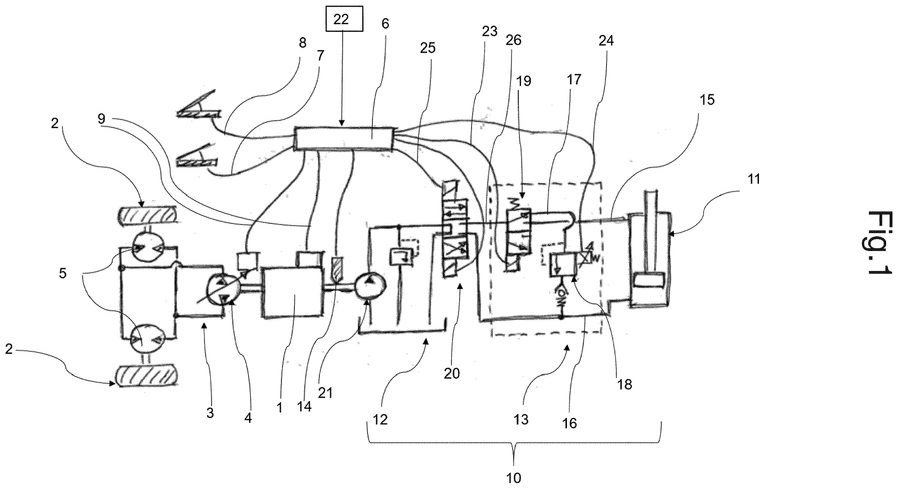

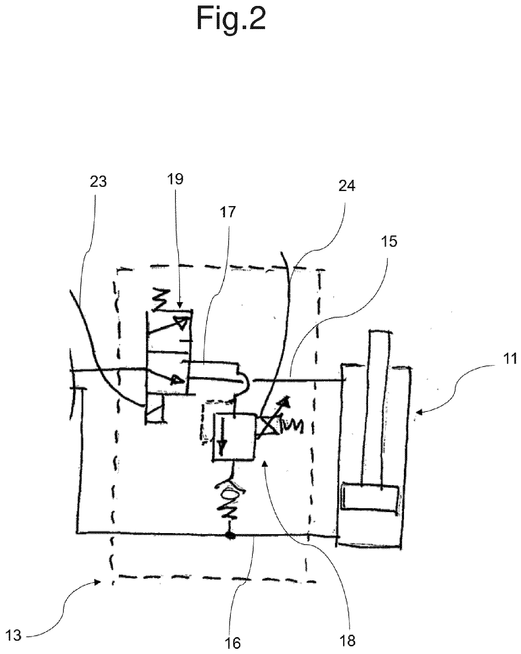

Further features and advantages of the invention are more apparent in the description below, with reference to a preferred, non-limiting, embodiment of a lift truck as illustrated in Figure 1 wherein a selective distribution unit is positioned in a first operating condition and in Figure 2 the selective distribution unit of Figure 1 is positioned in a second operating position. The lift truck comprises an internal combustion engine unit 1, at least one pair of drive wheels 2 and a hydrostatic transmission system 3 of the internal combustion engine unit 1 to the drive wheels 2.

The hydrostatic transmission system 3 comprises a pump 4, controlled by the engine unit, and a hydraulic motor 5 associated with each drive wheel 2.

A command and control unit 6 is configured to receive an acceleration signal 7 and a deceleration signal 8 and to control the speed of rotation of the engine unit 1 and the displacement of the pump 4, by means of respective control signals 9, on the basis of receiving the acceleration signal 7 and the deceleration signal 8, so as to be able to control the speed of the drive wheels 2.

The acceleration signal 7 derives from the activation of a command unit by the driver of the lift truck, for example in the form of a pedal.

According to an operating mode, the deceleration signal 8 is generated by activating a command unit by the driver of the lift truck, for example in the form of a pedal, as illustrated in Figure 1.

The command and control unit 6 is configured to receive the deceleration signal 8.

In a further operating mode, the command and control unit 6 generates the deceleration signal 8 following a comparison between the current state of the traction and the set-point request of the accelerator pedal 7, for example if the set-point of the speed requested by the driver is below the set-point of the forward speed of the engine unit 1.

A sensor 14 for measuring at least one operating value of the engine unit 1 is connected to the command and control unit 6.

In the preferred embodiment, the operating value is the number of revolutions of the engine unit 1.

The lift truck 1 comprises a hydraulic system 10 for actuating at least one actuator unit 11.

The command and control unit 6 is configured to activate the actuator unit 11 if it receives an activation signal 22 of the actuator unit 11.

The hydraulic system 10 comprises at least at least one main circuit 12 for distributing a hydraulic fluid and at least one auxiliary circuit 13 for actuating a respective actuator unit 11 by means of the hydraulic fluid.

The hydraulic fluid is in the form of oil of petroleum origin, optionally with additives.

In an embodiment not illustrated, the hydraulic system 10 comprises a plurality of auxiliary circuits 13, separate from each other, for actuating a respective actuator unit 11.

The main circuit 12 comprises at least one hydraulic fluid distribution pump 21.

The engine unit 1 drives the movement of the distribution pump 21 of the main circuit 12.

A unit 20 for distributing the hydraulic fluid is configured to pass from a closed condition, wherein the auxiliary circuit 13 is isolated from the main circuit 12, to an open condition, wherein the auxiliary circuit 13 is in communication with the main circuit 12.

The distribution unit 20 in the preferred embodiment is included in the main circuit 12.

The closed condition of the distribution unit 20 is maintained during the drive of the lift truck.

The auxiliary circuit 13 comprises at least a first branch 15 for delivery of the hydraulic fluid to the actuator unit 11 and at least a second branch 16 for return from the actuator unit 11.

The auxiliary circuit 13 comprises at least a third branch 17 along which is positioned at least one dissipating unit 18.

The auxiliary circuit 13 comprises a selective distribution unit 19 configured to pass at least between a first operating position, illustrated in Figure 1, at which it is in communication with the third branch 17, and a second operating position, illustrated in Figure 2, at which it is in communication with the actuator unit 11.

The distribution unit 20 is in communication with the selective distribution unit 19 by means of a distribution branch 26 of the hydraulic fluid.

Preferably, the selective distribution unit 19 is in the form of a solenoid valve.

In the embodiment described, the selective distribution unit 19 is in the form of a 3-way solenoid valve.

The selective distribution unit 19 is configured to pass from the first operating position to the second operating position if the activation of the actuator unit 11 is requested, that is to say, if the command and control unit 6 receives the activation signal 22 of the actuator unit 11.

It should be noted that the selective distribution unit 19 is positioned under normal operating conditions in the first operating position.

Advantageously, this operating condition prevents undesired movements of the actuator unit 11, in the event of a failure to operate of the selective distribution unit 19 and protects the actuator unit 11 from any overpressures of the hydraulic system 10 since it is normally isolated from the main circuit 12.

The command and control unit 6 is configured to control the selective distribution unit 19 from the first operating position to the second operating position, and vice versa, by means of a respective activation signal 23.

Only if the command and control unit 6 receives the activation signal 22 of the actuator unit 11 does the selective distribution unit 19 pass from the first operating position to the second operating position to allow the actuation of the actuator unit 11.

With reference to the third branch 17, it extends from the selective distribution unit 19 to the second return branch 16 in such a way that the dissipation unit 18 introduces the hydraulic fluid in the second return branch 16.

The pressure of the dissipating unit 18 is configured to be calibrated in relation to the extent of the dissipation.

Preferably, the dissipating unit 18 is in the form of a proportional pressure limiting valve.

The command and control unit 6 is configured to process the deceleration signal 8, both received and generated.

Under deceleration conditions, the command and control unit 6 is configured for comparing a reference value determined by the measuring sensor 14 with a threshold value and, if the reference value exceeds the threshold value, the command and control unit 6 controls at least the activation of the dissipation unit 18 by means of a respective activation signal 24.

The deceleration condition may occur, for example, according to the above-mentioned operating modes, that is to say, the activation of a control unit by the driver of the lift truck, for example in the form of a pedal as illustrated in Figure 1, or, following a comparison between the current state of the traction and the set-point request of the accelerator pedal 7, for example if the set-point of the speed requested by the driver is below the set-point of the forward speed of the engine unit 1.

In the preferred embodiment, the reference value is the number of revolutions of the engine unit 1.

In this way, the excess kinetic energy is dissipated by the dissipating unit 18.

The command and control unit 6 is configured to control the passage from the closed condition to the open condition, and vice versa, of the distribution unit 20.

It should be noted that, at least in the deceleration condition, the command and control unit 6 is configured to control the passage from the closed condition to the open condition of the distribution unit 20, if it is in the closed condition, by means of a respective activation signal 25. This control is fundamental for putting in fluid communication the main circuit 12 with the auxiliary circuit 13.

According to a preferred embodiment, the main circuit 12 comprises an enabling unit, not illustrated, of the distribution unit 20.

The enabling unit is in the form of a solenoid valve.

The command and control unit 6 is configured for activating and deactivating the enabling unit.

The command and control unit 6 is configured for activating and deactivating the enabling unit.

With reference to the above, in the deceleration condition, the command and control unit 6 is configured for activating the enabling unit, for controlling the passage from the closed condition to the open condition of the distribution unit 20, if it is in the closed condition, and for activating the dissipation unit 18.

## Claims

1. A lift truck comprising an internal combustion engine unit (1), at least one pair of drive wheels (2) and a hydrostatic transmission system (3) from the engine unit (1) to the drive wheels (2);
a hydraulic system (10) for actuating at least one actuator unit (11) comprising at least one main circuit (12) for distributing a hydraulic fluid and at least one auxiliary circuit (13) for actuating the actuator unit (11);
the auxiliary circuit (13) comprises at least a first branch (15) for delivery of the hydraulic fluid to the actuator unit (11) and at least a second branch (16) for return from the actuator unit (11);
the auxiliary circuit (13) comprises at least a third branch (17) along which is positioned at least one unit (18) for dissipating the hydraulic fluid;
**characterised in that**
the auxiliary circuit (13) comprises a selective distribution unit (19) configured to pass at least between a first operating position, at which it is in communication with the third branch (17), and a second operating position, at which it is in communication with the actuator unit (11);
a command and control unit (6) is configured to process at least one deceleration signal (8) and to receive at least one reference value of the engine unit (1); in the condition of deceleration of the lift truck (1), the command and control unit (6) is configured for comparing the reference value of the engine unit (1) with a threshold value and, if the reference value exceeds the threshold value, for controlling at least the activation of the dissipating unit (18).

2. The lift truck according to independent claim 1, **characterized in that** the selective distribution unit (19) is located at the first operating position and the command and control unit (6) is configured to control the passage of the first operating position to the second operating position if it receives an activation signal (22) for activating the actuator unit (11).

3. The lift truck according to any one of the preceding claims, **characterised in that** the third branch (17) extends from the selective distribution unit (19) to the second return branch (16) in such a way that the dissipation unit (18) introduces the hydraulic fluid in the second return branch (16).

4. The lift truck according to any one of the preceding claims, **characterised in that** a unit (20) for distributing the hydraulic fluid is configured to pass from a closed condition, wherein the auxiliary circuit (13) is not in communication with the main circuit (12), to an open condition, wherein the auxiliary circuit (13) is in communication with the main circuit (12).

5. The lift truck according to claim 4, **characterised in that** the command and control unit (6) is configured for controlling the passage from the closed condition to the open condition at least in the deceleration condition.

6. The lift truck according to claim 4 or 5, **characterised in that** the main circuit (12) comprises a unit for enabling the distribution unit (20); the command and control unit (6) is configured for activating and deactivating the enabling unit.

7. The lift truck according to claim 6, **characterised in that** at least in the deceleration condition; the command and control unit (6) is configured for activating the enabling unit, for controlling the passage from the closed condition to the open condition of the distribution unit (20), if it is in the closed condition, and for activating the dissipation unit (18).

8. The lift truck according to any one of the preceding claims, **characterised in that** the main circuit (12) comprises at least one pump (21) for distributing the hydraulic fluid moved by the engine unit (1).

9. The lift truck according to any one of claims 1 to 8, **characterised in that** it comprises a sensor (14) for measuring the number of revolutions of the engine unit (1) connected to the command and control unit (6); the reference value of the engine unit is the number of revolutions of the engine unit.

## Patentansprüche

1. Gabelstapler, umfassend eine Verbrennungsmotoreinheit (1), mindestens ein Paar Antriebsräder (2) und ein hydrostatisches Übertragungssystem (3) von der Motoreinheit (1) zu den Antriebsrädern (2);
ein Hydrauliksystem (10) zum Betätigen mindestens einer Aktoreinheit (11), umfassend mindestens einen Hauptkreislauf (12) zum Verteilen eines Hydraulikfluids und mindestens einen Hilfskreislauf (13) zum Betätigen der Aktoreinheit (11);
der Hilfskreislauf (13) umfasst mindestens einen ersten Zweig (15) zum Zuführen des Hydraulikfluids zur Aktoreinheit (11) und mindestens einen zweiten Zweig (16) zum Rückführen von der Aktoreinheit (11);
der Hilfskreislauf (13) umfasst mindestens einen dritten Zweig (17), entlang dem mindestens eine Einheit (18) zum Ableiten des Hydraulikfluids positioniert ist;
**dadurch gekennzeichnet, dass** der Hilfskreislauf (13) eine selektive Verteilereinheit (19) umfasst, die ausgelegt ist, um zumindest zwischen einer ersten Betriebsposition, in der sie mit dem dritten Zweig (17) in Kommunikation steht, und einer zweiten Betriebsposition, in der sie mit der Aktoreinheit (11) in Kommunikation steht, überzugehen;
eine Befehls- und Steuereinheit (6) ist zum Verarbeiten mindestens eines Verzögerungssignals (8) und zum Empfangen mindestens eines Referenzwerts der Motoreinheit (1) ausgelegt, wobei die Befehls- und Steuereinheit (6) im Zustand der Verzögerung des Gabelstaplers (1) zum Vergleichen des Referenzwerts der Motoreinheit (1) mit einem Schwellenwert und, wenn der Referenzwert den Schwellenwert überschreitet, zum Steuern mindestens der Aktivierung der Ableiteinheit (18) ausgelegt ist.

2. Gabelstapler nach dem unabhängigen Anspruch 1, **dadurch gekennzeichnet, dass** sich die selektive Verteilereinheit (19) in der ersten Betriebsposition befindet und die Befehls- und Steuereinheit (6) ausgelegt ist, um den Übergang der ersten Betriebsposition in die zweite Betriebsposition zu steuern, wenn sie ein Aktivierungssignal (22) zum Aktivieren der Aktoreinheit (11) empfängt.

3. Gabelstapler nach einem der vorhergehenden Ansprüche, **dadurch gekennzeichnet, dass** sich der dritte Zweig (17) von der selektiven Verteilereinheit (19) zum zweiten Rückführzweig (16) so erstreckt, dass die Ableiteinheit (18) das Hydraulikfluid in den zweiten Rückführzweig (16) einleitet.

4. Gabelstapler nach einem der vorhergehenden Ansprüche, **dadurch gekennzeichnet, dass** eine Einheit (20) zum Verteilen des Hydraulikfluids so ausgelegt ist, dass sie von einem geschlossenen Zustand, in dem der Hilfskreislauf (13) nicht in Kommunikation mit dem Hauptkreislauf (12) steht, in einen offenen Zustand übergeht, in dem der Hilfskreislauf (13) in Kommunikation mit dem Hauptkreislauf (12) steht.

5. Gabelstapler nach Anspruch 4, **dadurch gekennzeichnet, dass** die Befehls- und Steuereinheit (6) ausgelegt ist, um den Übergang vom geschlossenen Zustand in den offenen Zustand zumindest im Verzögerungszustand zu steuern.

6. Gabelstapler nach Anspruch 4 oder 5, **dadurch gekennzeichnet, dass** der Hauptkreislauf (12) eine Einheit zum Freigeben der Verteilereinheit (20) umfasst; die Befehls- und Steuereinheit (6) ist zum Aktivieren und Deaktivieren der Freigabeeinheit ausgelegt.

7. Gabelstapler nach Anspruch 6, **dadurch gekennzeichnet, dass** zumindest im Verzögerungszustand die Befehls- und Steuereinheit (6) zum Aktivieren der Freigabeeinheit ausgelegt ist, um den Übergang vom geschlossenen Zustand in den offenen Zustand der Verteilereinheit (20) zu steuern, wenn sie sich im geschlossenen Zustand befindet, und um die Ableiteinheit (18) zu aktivieren.

8. Gabelstapler nach einem der vorhergehenden Ansprüche, **dadurch gekennzeichnet, dass** der Hauptkreislauf (12) mindestens eine Pumpe (21) zum Verteilen des von der Motoreinheit (1) bewegten Hydraulikfluids umfasst.

9. Gabelstapler nach einem der Ansprüche 1 bis 8, **dadurch gekennzeichnet, dass** er einen Sensor (14) zum Messen der Drehzahl der Motoreinheit (1) umfasst, der mit der Befehls- und Steuereinheit (6) verbunden ist; wobei der Referenzwert der Motoreinheit die Drehzahl der Motoreinheit ist.

## Revendications

1. Chariot élévateur, comprenant un groupe moteur (1) à combustion interne, au moins une paire de roues motrices (2) et un système de transmission hydrostatique (3) du groupe moteur (1) aux roues motrices (2) ;
un système hydraulique (10) pour actionner au moins une unité d'actionneur (11), comprenant au moins un circuit principal (12) pour distribuer un fluide hydraulique et au moins un circuit auxiliaire (13) pour actionner l'unité d'actionneur (11) ;
le circuit auxiliaire (13) comprend au moins une première branche (15) pour la distribution du fluide hydraulique à l'unité d'actionneur (11) et au moins une deuxième branche (16) pour le retour en provenance de l'unité d'actionneur (11) ;
le circuit auxiliaire (13) comprend au moins une troisième branche (17) le long de laquelle est positionnée au moins une unité (18) pour dissiper le fluide hydraulique ;
**caractérisé en ce que** le circuit auxiliaire (13) comprend une unité de distribution sélective (19) configurée pour passer au moins entre une première position de fonctionnement, dans laquelle elle est en communication avec la troisième branche (17), et une deuxième position de fonctionnement, dans laquelle elle est en communication avec l'unité d'actionneur (11) ;
une unité de commande et de contrôle (6) est configurée pour traiter au moins un signal de décélération (8) et pour recevoir au moins une valeur de référence du groupe moteur (1); dans la condition de décélération du chariot élévateur (1), l'unité de commande et de contrôle (6) est configurée pour comparer la valeur de référence du groupe moteur (1) avec une valeur seuil et, si la valeur de référence dépasse la valeur seuil, pour commander au moins l'activation de l'unité de dissipation (18).

2. Chariot élévateur selon la revendication indépendante 1, **caractérisé en ce que** l'unité de distribution sélective (19) est située dans la première position de fonctionnement et l'unité de commande et de contrôle (6) est configurée pour commander le passage de la première position de fonctionnement à la deuxième position de fonctionnement si elle reçoit un signal d'activation (22) pour activer l'unité d'actionneur (11).

3. Chariot élévateur selon l'une quelconque des revendications précédentes, **caractérisé en ce que** la troisième branche (17) se prolonge de l'unité de distribution sélective (19) à la deuxième branche de retour (16) de telle sorte que l'unité de dissipation (18) introduit le fluide hydraulique dans la deuxième branche de retour (16).

4. Chariot élévateur selon l'une quelconque des revendications précédentes, **caractérisé en ce qu'**une unité (20) de distribution du fluide hydraulique est configurée pour passer d'une condition de fermeture, dans lequel le circuit auxiliaire (13) n'est pas en communication avec le circuit principal (12), à une condition d'ouverture, dans lequel le circuit auxiliaire (13) est en communication avec le circuit principal (12) .

5. Chariot élévateur selon la revendication 4, **caractérisé en ce que** l'unité de commande et de contrôle (6) est configurée pour commander le passage de la condition de fermeture à la condition d'ouverture au moins dans la condition de décélération.

6. Chariot élévateur selon la revendication 4 ou 5, **caractérisé en ce que** le circuit principal (12) comprend une unité d'activation de l'unité de distribution (20) ; l'unité de commande et de contrôle (6) est configurée pour activer et désactiver l'unité d'activation.

7. Chariot élévateur selon la revendication 6, **caractérisé en ce que**, au moins dans la condition de décélération, l'unité de commande et de contrôle (6) est configurée pour activer l'unité d'activation, pour commander le passage de la condition de fermeture à la condition d'ouverture de l'unité de distribution (20), si elle se trouve dans la condition de fermeture, et pour activer l'unité de dissipation (18).

8. Chariot élévateur selon l'une quelconque des revendications précédentes, **caractérisé en ce que** le circuit principal (12) comprend au moins une pompe (21) pour distribuer le fluide hydraulique déplacé par le groupe moteur (1).

9. Chariot élévateur selon l'une quelconque des revendications 1 à 8, **caractérisé en ce qu'**il comprend un capteur (14) de mesure du nombre de révolutions du groupe moteur (1) relié à l'unité de commande et de contrôle (6) ; la valeur de référence du groupe moteur est le nombre de révolutions du groupe moteur.
